# EUROPÄISCHE PATENTSCHRIFT

(11) **EP 1 547 833 B1**
(45) Veröffentlichungstag und Bekanntmachung des Hinweises auf die Patenterteilung: **17.06.2009**
(21) Anmeldenummer: 04029957.0
(22) Anmeldetag: 17.12.2004
(51) Int. Cl.: B60G 17/015, B60T 8/00

(54) **Integration einer Luftfederungselektronik in ein elektronisches Bremssystem**
Integration of an air-spring control into an electronic brake system
Integration du réglage d'un ressort pneumatique dans un système de freinage électronique

(30) Priorität: 23.12.2003 DE 10360875
(43) Veröffentlichungstag der Anmeldung: 29.06.2005
(73) Patentinhaber: KNORR-BREMSE SYSTEME FÜR NUTZFAHRZEUGE GMBH, 80809 München (DE)
(72) Erfinder: Karthäuser, Klaus, 71723 Grossbottwar (DE); Broch, Walter, 71679 Asperg (DE)
(74) Vertreter: Schönmann, Kurt

(56) Entgegenhaltungen:
- DE-A1- 4 305 958
- DE-A1- 10 155 646
- DE-A1- 19 654 223
- DE-A1- 19 716 197
- US-B1- 6 202 011

## Beschreibung

Die Erfindung betrifft ein Steuergerät für ein Luftfederungssystem und/oder ein elektronisches Bremssystem.

Bekannt sind elektronische Luftfederungssysteme, auch elektronische Niveauregelungssysteme genannt, und elektronische Bremssysteme, die jeweils von einer gesonderten, systemeigenen Steuerungselektronik angesteuert werden.

Die gattungsgemäße deutsche Offenlegungsschrift 43 05 958 beschreibt ein System mit wenigsten zwei unterschiedlichen Systemfunktionen. Diese unterschiedlichen Systemfunktionen werden durch die Ansteuerung verschiedener funktionsspezifischer Komponenten erreicht. Derartige Systemfunktionen können sein: Niveaureglung einerseits und Wankregelung andererseits, Fensterbetätigung einerseits und Schiebedachbetätigung andererseits, Regelung der Klimaanlage einerseits und Betätigung der Zentralverriegelung andererseits, Antiblockierregelung einerseits und Fahrwerkregelung andererseits. Die funktionsspezifischen Komponenten sind Stellglieder, wie z. B. Magnetventile oder Elektromotoren. Dabei sind Auswahlmittel vorgesehen, mittels derer der eine Teil der funktionsspezifischen Komponenten in Reaktion auf programmgemäße Ansteuerung keine Änderung vollzieht, während der andere Teil der funktionsspezifischen Komponenten zur Erreichung der jeweiligen Systemfunktion ansteuergemäß arbeitet.

In der deutschen Offenlegungsschrift 10143888 ist eine kombinierte Ventileinrichtung für Bremsdruck- und Niveauregelung mittels Druckluftsteuerung offenbart. Ausgehend von separaten Systemen zur Druckluftsteuerung für eine Bremsdruck- und eine Niveauregulierung wird eine Ventileinrichtung zur Verwendung in Bremsdruck- und Niveau-Regelsystem angegeben, durch die der Einsatz derartiger Systeme vereinfacht und kostengünstiger ausgeführt werden kann. Die Ventileinrichtung weist ein Druckmittel-Vorratsanschluss, einen ersten Druckmodulationsanschluss zum Anschluss eines Bremszylinders und einen zweiten Druckmodulationsanschluss zum Anschluss eines Luftfederbalgs auf, wobei der Strömungspfad von dem Vorratsanschluss zu den Druckmodulationsanschlüssen einen gemeinsamen Druckmittelzufluss-Abschnitt aufweist, der sowohl mit dem ersten Druckmodulationsanschluss als auch mit dem zweiten Druckmodulationsanschluss verbindbar ist."

Die Systemelektronik der Luftfederungssysteme von Nutzfahrzeugen nach dem Stand der Technik ist in einem eigenen elektronischen Steuergerät aufgenommen, das in dem Führerhaus des Nutzkraftfahrzeuges untergebracht ist. Dies hat sich in der historische Entwicklung als zweckmäßig erwiesen, da das elektronische Steuergerät dort nicht spritzwasserdicht abgedichtet werden muss und über eine Fernbedienung direkt betätigt werden kann. Dies hat zwangläufig zur Bedingung, dass Verbindungskabel vom Führerhaus zu den Steuerelementen des Luftfederungssystems geführt werden müssen. Bei modernen Nutzkraftfahrzeugen ist der Motor häufig unter dem Führerhaus angeordnet. Um an Motor heranzukommen, kann das Führerhaus in der Regel - zumindest bei den neueren Lastkraftwagen - über ein Kippgelenk abgekippt werden, so dass der Motor und der Antriebsstrang frei zugänglich sind. Die Kabelverbindung muss in diesem Fall über das Kippgelenk durchgeführt werden.

Nachteilig an dieser Anordnung sind die große notwendige Kabellänge und das beschränkte Platzangebot zur Kabeldurchführung im Kippgelenk. Das Steuergerät des Luftfedersystems benötigt ein eigenes Gehäuse und eigene elektronische Bauteile, wie beispielsweise Schutzschaltungen zur Spannungsversorgung.

Der Erfindung liegt die Aufgabe zugrunde, den Verkabelungsaufwand zu reduzieren und Systemkosten durch Reduzierung der einzelnen Bauelemente zu verringern.

Diese Aufgabe wird gelöst durch ein Steuergerät mit den Merkmalen des Anspruchs 1. Vorteilhafte Ausgestaltungen ergeben sich aus den Unteransprüchen.

Durch die Zusammenfassung von der Steuerungselektronik des Luftfederungssystems und der Steuerungselektronik des elektronischen Bremssystems in einem zentralen Steuergerät können beide Steuerungen in nur einem Gehäuse untergebracht werden und einige elektronische Komponenten, wie beispielsweise Spannungsversorgung, Kommunikationstreiber, Sensorauswerteschaltung usw. können doppelt genutzt werden. Ebenfalls können Hardwarespeichersysteme für die Steuerungselektronik des Luftfederungssystems und die elektronische Steuerung des elektronischen Bremssystems gleichzeitig genutzt werden. Die Steuerungselektronik des Luftfederungssystems und die Steuerungselektronik des elektronischen Bremssystems weisen in ihren Steuerungsprogrammen eine Logikstruktur auf, die derart entkoppelt sind, dass beide Steuerungsprogramme für sich geändert werden können, insbesondere bei einem Softwareupdate. Auf diese Weise sind beide Systeme softwareseitig weitgehend autark.

Das Steuergerät ist vorteilhafter Weise derart aufgebaut, dass in einem frei programmierbaren Rechner verschiedene Steuersoftware verwendet werden kann. Dies bietet ein Maximum an Flexibilität. Dadurch können Komponenten des Steuergerätes für die beiden Zwecke Luftfederungssystem und elektronisches Bremssystem verwendet werden.

In einer vorteilhaften Ausgestaltung der Erfindung werden sämtliche Steuersignale für das Luftfederungssystem und das elektronische Bremssystem über ein zweipoliges Kabel aus dem Steuergerät geführt. Damit kann eine Kabeldurchführung im Kippgelenk platzsparend ausgeführt werden. Bei einer Ausführung als verdrilltes Kabel, als so genanntes "Twisted Pair" wird auch bei einer relativ großen Kabellänge, wie sie bei einem Sattelschlepper notwendig ist, eine störende elektromagnetische Einkopplung gering gehalten.

Vorzugsweise erfolgt die Systeminformation für das Luftfederungssystem und das elektronische Bremssystem über eine CAN-Bus-Schnittstelle. Auf diese Weise können verschiedene Informationen in einem genormten System über ein zweipoliges Kabel übermittelt werden.

Vorzugsweise weisen die Steuerungselektronik des Luftfederungssystems und die Steuerungselektronik des elektronischen Bremssystems eine direkt an das Steuergerät geschlossene Fernbedienung auf. Der Verkabelungsaufwand wird dadurch gering gehalten.

In einer bevorzugten Ausgestaltung der Erfindung weisen die Steuerungselektronik des Luftfederungssystems und die Steuerungselektronik des elektronischen Bremssystems eine Schnittstelle auf, die derart eingerichtet ist, dass bei Fahrzeugen ohne elektronisches Bremssystem die Komponenten des Luftfederungssystems ohne Modifikation eingesetzt werden können. Dies gewährleistet eine hohe Flexibilität der Einsatzmöglichkeiten bei geringer Komponentenvielfalt.

In einer vorteilhaften Ausgestaltung der Erfindung ist in das elektronische Bremssystem eine elektronische Feststellbremse integrierbar. Auf diese Weise werden elektronische Komponenten, wie beispielsweise Spannungsversorgung, Kommunikationstreiber, Sensorauswerteschaltung usw. auch für die elektronische Feststellbremse genutzt.

In einer bevorzugten Ausgestaltung der Erfindung ist ein Drucksensor eines Luftfederungssystems in das elektronische Bremssystem integrierbar. Dies hat eine kompakte Bauweise zum Vorteil.

In einer vorteilhaften Ausgestaltung der Erfindung ist die Steuerungselektronik des Luftfederungssystems in einer Zentralelektronik und/oder in einer Elektronik von Achs- oder Radmodulen des elektronischen Bremssystems EBS integriert.

Vorzugsweise werden Signale von Höhenstandssensoren und gegebenenfalls von Drucksensoren des Luftfederungssystems in die Achs- oder Radmodule des elektronischen Bremssystems eingespeist und die Ansteuerung der Luftfederventile des Luftfederungssystems erfolgt aus den Achs- oder Radmodulen des elektronischen Bremssystems heraus.

Vorteilhafter Weise sind die Algorithmen der Luftfederungssteuerung in der Zentralelektronik des elektronischen Bremssystems abgespeichert und zum Ablauf aufrufbar. Diese Aufteilung der Software Module hat den Vorzug eine Änderung oder ein Update der Software alleine durch den Austausch oder eine Neuprogrammierung der Zentralelektronik, d. h. des zentralen Steuergeräts vornehmen zu können.

## Patentansprüche

1. Steuergerät für ein Luftfederungssystem und/oder ein Bremssystem, **dadurch gekennzeichnet, dass** es als zentrales Steuergerät die Steuerungselektronik des Luftfederungssystems und die elektronische Steuerung des elektronischen Bremssystems zusammenfasst und dass die Steuerungselektronik des Luftfederungssystems und die Steuerungselektronik des elektronischen Bremssystems in ihren Steuerungsprogrammen eine Logikstruktur aufweisen, die derart entkoppelt sind, dass beide Steuerungsprogramme für sich geändert werden können, insbesondere bei einem Softwareupdate.

2. Steuergerät nach Anspruch 1, **dadurch gekennzeichnet, dass** das Steuergerät derart aufgebaut ist, dass in einem frei programmierbaren Rechner verschiedene Steuersoftware verwendet werden kann.

3. Steuergerät nach Anspruch 1 oder 2, **dadurch gekennzeichnet, dass** sämtliche Steuersignale für das Luftfederungssystem und das elektronische Bremssystem über ein zweipoliges Kabel aus dem Steuergerät geführt werden.

4. Steuergerät nach einem der Ansprüche 1 bis 3, **dadurch gekennzeichnet, dass** die Anbindung an das Luftfederungssystem und das elektronische Bremssystem über eine CAN-Bus-Schnittstelle erfolgt.

5. Steuergerät nach einem der Ansprüche 1 bis 4, **dadurch gekennzeichnet, dass** die Steuerungselektronik des Luftfederungssystem und die Steuerungselektronik des elektronischen Bremssystems eine direkt an das Steuergerät angeschlossene Fernbedienung aufweisen.

6. Steuergerät nach einem der Ansprüche 1 bis 5, **dadurch gekennzeichnet, dass** die Steuerungselektronik des Luftfederungssystems und die Steuerungselektronik des elektronischen Bremssystems eine Schnittstelle aufweisen, die derart eingerichtet ist, dass bei Fahrzeugen ohne elektronisches Bremssystem die Komponenten des Luftfederungssystems ohne Modifikation eingesetzt werden können.

7. Steuergerät nach einem der Ansprüche 1 bis 6, **dadurch gekennzeichnet, dass** in das Steuergerät ein Steuergerät einer elektronischen Feststellbremse integrierbar ist.

8. Steuergerät nach einem der Ansprüche 1 bis 7, **dadurch gekennzeichnet, dass** die Steuerungselektronik einer Zentralelektronik oder in einer Elektronik von Achs- oder Radmodulen des elektronischen Bremssystems EBS integriert ist.

9. Steuergerät nach Anspruch 8, **dadurch gekennzeichnet, dass** Signale von Höhenstandssensoren und/oder von Drucksensoren des Luftfederungssystems in die Achs- oder Radmodule des elektronischen Bremssystems einspeisbar sind und Luftfederventile des Luftfederungssystems aus den Achs- oder Radmodulen des elektronischen Bremssystems heraus ansteuerbar sind.

## Claims

1. Controller system for a pneumatic suspension system and/or a brake system,
**characterised in that** it is a central controller system combining the electronic control system of said pneumatic suspension system and the electronic control system of said electronic brake system, and that said electronic control system of said pneumatic suspension system and the electronic control system of said electronic brake system present a logic structure in their control programmes which are decoupled in such a way that both control programmes may be modified separately, in particular in the case of a software update.

2. Controller system according to Claim 1, **characterised in that** the controller system is structured in such a manner that different control software may be used in a freely programmable computer.

3. Controller system according to Claim 1 or 2, **characterised in that** all the control signals for said pneumatic suspension system and said electronic brake system are passed via a two-pole cable out of the controller system.

4. Controller system according to any of the Claims 1 to 3, **characterised in that** the interconnection to said pneumatic suspension system and said electronic brake system is realised via a CAN bus interface.

5. Controller system according to any of the Claims 1 to 4, **characterised in that** said electronic control system of said pneumatic suspension system and said electronic control system of said electronic brake system comprise a remote controller directly connected to the controller system.

6. Controller system according to any of the Claims 1 to 5, **characterised in that** said electronic control system of said pneumatic suspension system and said electronic control system of said electronic brake system present an interface so designed that the components of said pneumatic suspension system may be used without any modification in vehicles not equipped with an electronic brake system.

7. Controller system according to any of the Claims 1 to 6, **characterised in that** a controller of an electronic parking brake may be integrated into the controller system.

8. Controller system according to any of the Claims 1 to 7, **characterised in that** the electronic controller module is integrated into a central electronic controller system or into an electronic system of axle or wheel modules of the electronic brake system EBS.

9. Controller system according to Claim 8, **characterised in that** signals from level detectors and/or pressure detectors of said pneumatic suspension system may be supplied into said axle or wheel modules of said electronic brake system and that air spring valves of said pneumatic suspension system may be controlled from said axle or wheel modules of said electronic brake system.

## Revendications

1. Appareil de commande for a système de suspension pneumatique et/ou un système de freinage,
**caractérisé en ce qu'**il est un appareil de commande central combinant le système électronique de commande dudit système de suspension pneumatique et le système électronique de commande dudit système de freinage électronique, et **en ce que** ledit système de commande électronique dudit système de suspension pneumatique et le système électronique de commande dudit système de freinage électronique présentent une structure de logique dans leurs programmes de commande, qui sont découplés d'une manière à permettre une modification séparée des deux programmes de commande, en particulier au cas d'une mise à jour du logiciel.

2. Appareil de commande selon la revendication 1, **caractérisé en ce que** l'appareil de commande est structuré d'une manière à permettre l'emploi d'un logiciel de commande différent sur un ordinateur librement programmable.

3. Appareil de commande selon la revendication 1 ou 2, **caractérisé en ce que** tous les signaux de commande pour ledit système de suspension pneumatique et ledit système électronique de freinage sont passés via un câble à deux fiches en dehors de l'appareil de commande

4. Appareil de commande selon une quelconque des revendications 1 à 3,
**caractérisé en ce que** l'interconnexion audit système de suspension pneumatique et audit système électronique de freinage se fait via une interface de bus type CAN.

5. Appareil de commande selon une quelconque des revendications 1 à 4,
**caractérisé en ce que** ledit système de commande électronique dudit système de suspension pneumatique et ledit système de commande électronique dudit système de freinage électronique comprennent un moyen de télécommande relié directement à l'appareil de commande

6. Appareil de commande selon une quelconque des revendications 1 à 5,
**caractérisé en ce que** ledit système de commande électronique dudit système de suspension pneumatique et ledit système de commande électronique dudit système de freinage électronique présentent une interface si aménagée qu'on puisse utiliser les composants dudit système de suspension pneumatique sans aucune modification dans des véhicules non équipés d'un système électronique de freinage.

7. Appareil de commande selon une quelconque des revendications 1 à 6,
**caractérisé en ce qu'**une unité de commande d'un frein électronique d'arrêt puisse s'intégrer dans l'appareil de commande

8. Appareil de commande selon une quelconque des revendications 1 à 7,
**caractérisé en ce que** l'unité de commande électronique est intégrée dans un appareil de commande électronique central ou dans un système électronique des modules d'essieu ou de roue du système de freinage électronique EBS.

9. Appareil de commande selon la revendication 8, **caractérisé en ce que** des signaux venant des détecteurs de niveau et/ou des détecteurs de pression dudit système de suspension pneumatique peuvent s'alimenter dans lesdits modules d'essieu ou de roue dudit système de freinage électronique et **en ce que** des valves de régulation de suspension pneumatique dudit système de suspension pneumatique sont commandables à partir des modules d'essieu ou de roue dudit système de freinage électronique.
